Europäisches Patentamt

European Patent Office

Office européen des brevets

(11) Publication number: **0 421 906 A1**

# EUROPEAN PATENT APPLICATION

(21) Application number: 90460001.2

(22) Date of filing: 03.01.90

(51) Int. Cl.5: **H01R 25/00**, H01R 13/72, H02G 11/02

(30) Priority: 06.10.89 US 418185

(43) Date of publication of application:
10.04.91 Bulletin 91/15

(84) Designated Contracting States:
**AT BE CH DE DK ES FR GB GR IT LI LU NL SE**

(71) Applicant: PACOMEX INDUSTRIES INC.
7960 Zionsville Road
Indianapolis Indiana 46268-1649(US)

(72) Inventor: **Luu, Daniel H.V.**
1672 O'Bara Court
Carmel Indiana 46036(US)

(74) Representative: **Corlau, Vincent**
c/o Cabinet Vidon Immeuble Germanium 80
avenue des Buttes de Coesmes
F-35700 Rennes(FR)

(54) **Cord storing power strip.**

(57) A cord storing power strip 10 includes an electrical cord 12 for carrying electrical power having a first end 14 including a plug 16 for insertion into an electrical outlet and a second end 18 including a power strip body 22 having a first side 24 including elevated end portions 28, 30 and a depressed central portion 26, a second side 32, and a perimetral edge 34 joining the first and second sides. The central depressed portion 26 of the first side 24 includes a plurality of electrical outlets 36, 38 for distributing electrical power therefrom divided into at least one unswitched outlet 36 and at least one switched outlet 38, and a switch 40 for switching power off and on to the at least one switched outlet 38. A groove 48 in the perimetral edge 34 extends around the body 22 for storing at least a portion of the electrical cord 12, the groove 48 being defined in part by generally parallel sidewalls 50,52 spaced apart from each other by a distance about equal to a non-zero whole number multiple of the diameter of the cord 12, and by an inner wall 54 spaced inwardly from the perimetral edge by a distance about equal to a non-zero whole number multiple of the diameter of the cord 12. Nubs 56 are provided for retaining at least a portion of the electrical cord 12 in the groove 48.

FIG. 1

EP 0 421 906 A1

# CORD STORING POWER STRIP

## Background of the Invention

The present invention relates generally to power strips and particularly to power strips fixed to power cords that provide extended delivery of electrical power for a location spaced at a distance from a fixed position electrical power outlet.

In modern homes and offices, it is conventional to position duplex electrical outlets at spaced strategic locations in almost every room. Many rooms will often include more than one of such fixed location wall-mounted duplex electrical outlet for supplying power to a wide variety of appliances and equipment. Despite the number and position of such wall-mounted duplex outlets, it often becomes necessary to supply one or more appliances or pieces of equipment with power at a position sufficiently spaced from any duplex outlet that an electrical extension cord is required.

When such an electrical extension is required, the presence of the electrical cord of the extension often contributes to an unsightly appearance and may even result in a safety hazard if not carefully directed so as to avoid pedestrian traffic and the like.

## Summary of the Invention

To achieve a neater and cleaner appearance, and help minimize any possible safety hazards, a power strip in accordance with the present invention includes a cord storing feature. An electrical cord for carrying electrical power includes a first end having a plug for insertion into an electrical outlet and a second end to which the power strip is fixed. The power strip generally comprises a body having a first side, a second side, and a perimetral edge joining the first and second sides. The body includes a plurality of electrical outlets for distributing electrical power and a cord storing means situated on the perimetral edge of the body for storing at least a portion of the length of the electrical cord.

The cord storing means generally comprises a groove in the perimetral edge extending around the body and means for retaining at least a portion of the electrical cord in the groove. The electrical cord retaining means preferably is in the form of a plurality of spaced nubs protruding into the groove from an edge thereof. The groove itself is defined in part by generally parallel sidewalls spaced apart from each other by a distance about equal to a non-zero whole number multiple of the diameter of the cord. The groove is also defined in part by an inner wall spaced inwardly from the perimetral edge by a distance about equal to a non-zero whole number multiple of the diameter of the cord.

One feature of the power strip of the present invention is the cord storing groove which permits one or more lengths of the cord to be wrapped around the perimetral edge of the power strip and retained by the retaining means. This feature has the advantage of making the power strip and extension cord attach thereto, and have a neat and clean appearance. It has the further advantage of minimizing any possible safety hazard which might occur due to the presence of an uncontrolled length of electrical cord lying in an otherwise exposed area.

Additional features and advantages of the invention will become apparent to those skilled in the art upon consideration of the following description of a preferred embodiment exemplifying the best mode of carrying out the invention as presently perceived. The detailed description particularly refers to the accompanying drawings.

## Brief Description of the Drawings

Fig. 1 is a perspective view of a cord storing power strip in accordance with the present invention showing the electrical power cord wrapped about the perimeter of the power strip.

Fig. 2 is an end view of the power strip shown in Fig. 1 with the electrical cord severed therefrom for the purpose of clarity.

Fig. 3 is an opposite end view of an alternative embodiment of a power strip in accordance with the present invention.

Fig. 4 is an opposite end view of yet another alternative embodiment of a power strip in accordance with the present invention.

## Description of Preferred Embodiments

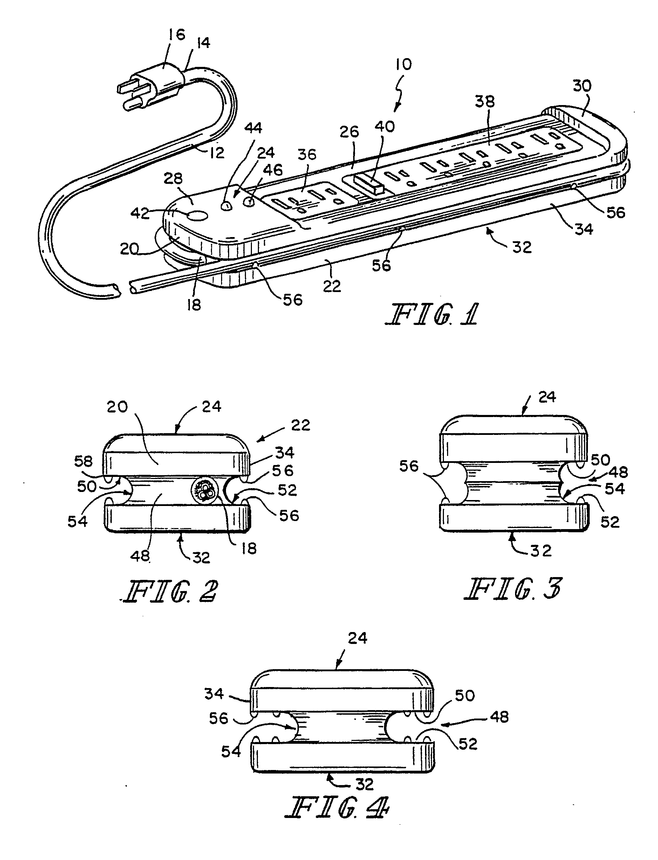

A cord storing power strip 10 in accordance with the present invention is shown in perspective in Fig. 1. The power strip 10 comprises an electrical cord having a first end 14 which includes a plug 16 for insertion into an electrical outlet such as a wall-mounted duplex outlet (not shown). The electrical cord 12 includes a second end 18 fixed to a first end 20 of power strip body 22.

The power strip body 22 generally comprises an upper surface 24 having a depressed central portion 26 and raised end portions 28 and 30. The body 22 also includes a lower surface 32 separated from the upper surface 24 by a perimetral edge 34.

The depressed central portion 26 of upper surface 24 is shown to include a first set of electrical outlets 36 and a second set of electrical outlets 38 separated by a switch 40. The switch 40 controls the flow of electrical power from cord 12 to the switched electrical outlets 38 so that power can be switched either on or off. On the other hand, electrical outlets 36 are unswitched, that is, are always connected to power cord 12 and are not controlled by switch 40.

The raised end portion 28 of the upper surface 24 is shown to also include a circuit breaker reset button 42 for resetting a circuit breaker included within the power strip 10 for breaking the flow of power to the outlets 36 and 38 in the event of an excessive current demand. A surge protector reset button 44 is also situated on the upper surface 24 for resetting a surge protection means provided for breaking the flow of power to the power strip outlets 36 and 38 in the event of a voltage surge beyond the preset value. An indicator 46 is further included for indicating the power condition of the power strip 10.

The perimetral edge 34 includes a groove 48 best shown in its alternative embodiments in Figs. 2, 3, and 4. As shown in Fig. 2, the cord 18 has been severed from the first end 20 of the power strip body 22 for clarity and to permit comparison between the diameter of the power cord 18 and the groove 48. The groove 48 is defined by an upper sidewall 50 and a lower sidewall 52 which is situated parallel to the upper sidewall 50. The innermost wall of the groove 54 is shown to be concave and depressed inwardly from the perimetral edge 34. A plurality of nubs 56 are situated adjacent the lip 58 of the groove 48 and act to retain the electrical cord 12 in groove 48.

In general, the upper sidewall 50 is shown to be spaced from the lower sidewall 52 by a non-zero whole number multiple of the diameter of the cord 18. In Figs. 2 and 4, the whole number is 1 while in Fig. 3 the whole number is 2. In a similar manner, the inner wall 54 of groove 48 is spaced inwardly from the perimetral edge 34 by a distance that is equal to a non-zero whole number multiple of the diameter of the cord. In Figs. 2 and 3 the whole number is 1 while in Fig. 4 the whole number is 2.

It will be appreciated that the spacing between the upper and lower edges 50 and 52, and the spacing between the inner edge 54 and perimetral edge 54 can be increased beyond that illustrated in accordance with the general principals set forth above. It will be further appreciated that although the invention has been described in detail with reference to the illustrated preferred embodiments, variations and modifications exist with the scope and spirit of the invention as described and as defined in the following claims.

## Claims

1. A cord storing power strip characterized by comprising: an electrical cord (12) for carrying electrical power having a first end (14) including a plug (16) for insertion into an electrical outlet and a second end (15), a power strip (10) fixed to the second end (18) of the cord (12) comprising a body (22) having a first side (24), a second side (32), and a perimetral edge (34) joining the first and second sides, the body (22) including a plurality (36,38) of electrical outlets for distributing electrical power therefrom, and cord storing means (48) situated on the perimetral edge (34) of the body for storing at least a portion of the electrical cord (12).

2. The cord storing power strip of claim 1 wherein the cord storing means comprises a groove (48) in the perimetral edge (34) extending around the body (22) and means (56) for retaining at least a portion of the electrical cord in the groove (48).

3. The cord storing power strip of claim 2 wherein the retaining means comprise a plurality of spaced nubs (56) protruding into the groove (48) from an edge thereof.

4. The cord storing power strip of claim 2 wherein the groove (48) is defined in part by generally parallel sidewalls (50,52) spaced apart from each other by a distance about equal to a whole number multiple of the diameter of the cord (12).

5. The cord storing power strip of claim 4 wherein the groove (48) is defined in part by an inner wall (54) spaced inwardly from the perimetral edge (34) by a distance about equal to a whole number multiple of the diameter of the cord (12).

6. The cord storing power strip of claim 1 wherein the first side (24) includes elevated end portions (28,30) and a depressed central portion (26), the outlets (36,38) being confined to the depressed central portion (26).

7. A cord storing power strip characterized by comprising: an electrical cord (12) for carrying electrical power having a first end (14) including a plug (16) for insertion into an electrical outlet and a second end (18), a power strip (10) fixed to the second end (18) of the cord (12) comprising a body (22) having a first side (24), a second side (32), and a perimetral edge (34) joining the first and second sides, the body (22) including a plurality (36,38) of electrical outlets situated at least in the first side (24) for distribution electrical power therefrom, and a groove (48) in the perimetral edge (34) extending around the body (22) for storing at least a portion of the electrical cord (12), the groove (48) being defined in part by generally parallel sidewalls (50,52) spaced apart from each other by a distance about equal to a whole number multiple of the diameter of the cord (12), and by an inner wall (54) spaced inwardly from the perimetral edge (34) by a distance about equal to a whole number multiple of the diameter of the cord (12), and means (56) for retaining at least a portion of the electrical cord (12) in the groove (48).

8. The cord storing power strip of clain 7 wherein the retaining means comprises a plurality of spaced nubs (56) protruding into the groove (48) from an edge thereof.

9. The cord storing power strip of claim 7 wherein the first side includes elevated end portions (28,30) and a depressed central portion (26), the outlets being confined to the depressed central portion (26).

10. A cord storing power strip characterized by comprising: an electrical cord (12) for carrying electrical power having a first end (14) including a plug (16) for insertion into an electrical outled and a second end (18), a power strip (10) fixed to the second end (18) of the cord (12) comprising a body (22) having a first side (24) including elevated end portions (28,30) and a depressed central portion (26), a second side (32), and a perimetral edge (34) joining the first and second sides, the central depressed portion (26) of the first side (24) including a plurality (36,38) of electrical outlets for distributing electrical power therefrom divided into at least one unswitched outlet (36) and at least one switched outlet (38), switch means (40) situated in the central depressed portion (26) of the first side (24) for switching power off and on to the at least one switched outlet (38), and a groove (48) in the perimetral edge (34) extending around the body (22) for storing at least a portion of the electrical cord (12), the groove (48) being defined in part by generally parallel sidewalls (50,52) spaced apart from each other by a distance about equal to a non-zero whole number multiple of the diameter of the cord (12), and by an inner wall (54) spaced inwardly from the perimetral edge (34) by a distance about equal to a non-zero whole number multiple of the diameter of the cord (12), and means (56) for retaining at least a portion of the electrical cord (12) in the groove (48).

11. The cord storing power strip of claim 10 wherein the retaining means comprises a plurality of spaced nubs (56) protruding into the groove (48) from an edge thereof.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-7 930 003  (H. DIEBOLDER) <br> * pages 4 - 7; figures 1-3 * | 1-5,7-9, 11 | H 01 R 25/00 <br> H 01 R 13/72 <br> H 02 G 11/02 |
| X | DE-A-2 915 587  (K. BÜHLER) <br> * page 13, lines 1 - 17; figure 2 * | 1,2,7,10 | |
| A | US-A-3 290 453  (R.H. JENSEN) <br> * claim 1; figures 1, 2, 4 * | 1,7,10 | |
| A | BULLETIN DES SCHWEIZERISCHEN ELEKTROTECH-NISCHEN VEREINS. vol. 68, no. 4, 19 February 1977, ZURICH CH page 209 "Vierfach-Steckdose mit Wickelboy" <br> * page 209, right-hand column, paragraph 2-4 * | 1,7,10 | |
| A | US-A-3 689 868  (E.L. SNYDER) <br> * abstract; figure 4 * | 1,7,10 | |

TECHNICAL FIELDS
SEARCHED (Int. Cl.5)

H 01 R
H 02 G

The present search report has been drawn up for all claims

| Place of search | Date of completion of search | Examiner |
|---|---|---|
| The Hague | 16 January 91 | LOMMEL A. |